# EUROPEAN PATENT APPLICATION

(11) **EP 3 001 051 A1**
(43) Date of publication of application: **30.03.2016**
(21) Application number: 15183951.1
(22) Date of filing: 04.09.2015
(51) Int. Cl.: F16C 19/18, F16C 19/50, F16C 33/60

(54) **BEARING UNIT FOR PINIONS**

(30) Priority: 29.09.2014 IT TO20140770
(71) Applicant: Aktiebolaget SKF, 41 550 Göteborg (SE)
(72) Inventor: CIULLA, Luca, I-10137 Torino (IT); MALDERA, Carlo, I-10094 Giaveno (TO) (IT)
(74) Representative: Tedeschini, Luca

(57) **Abstract**

A bearing unit (10) for pinions, in which a pinion (90) is rotatably supported through the bearing unit from the bearing unit itself and is mounted projecting from the bearing unit which is provided with a single outer ring (20) with two raceways (22a, 22b); an inner ring (30) defined by a spacer (33) and by two half-rings (31) disposed on opposite sides of the spacer (33) axially aligned with each other and each having a respective raceway (32a, 32b) ; two rows (40) of balls (41) arranged inside of the raceways (22a, 32a) (22b, 32b), where the diameters both of the rows (40) of balls, and the balls (41) themselves are different from each other depending on the proximity of the row (40) to the head (90a) of the pinion (90).

## Description

### Technical field

The present invention relates to bearing unit for pinions, in which the pinion gear is rotatably supported through the bearing unit from the bearing itself and is mounted projecting from the bearing unit.

### Background Art

From US patent 6,769,809 a bearing unit for pinions is known, the bearing unit comprising:
- a single outer ring internally provided with two raceways;
- an inner ring consisting of two half rings arranged axially aligned with each other and each having a respective raceway;
- two rows of balls arranged inside said raceways in an intermediate position between the outer ring and the inner ring to allow the rotation of the inner ring with respect to the outer ring;
and in which the balls of a first row have a different diameter with respect to the diameter of the balls of the other row and the two rows of balls have diameters of different sizes.

In the above described unit the raceways of the two half rings are axially aligned with respect to the related raceways of the outer ring, and, moreover, the two rows of balls are arranged in a position axially close to each other thus conferring, on the one hand, a compact configuration the bearing unit, but also avoiding the use of the bearing unit in the case where the axial component of the forces applied by the pinion on the bearing unit are particularly high, or in the case where the pinion presents greater axial dimensions, for example typical of applications in the automotive field.

### Invention summary

Aim of the present invention is to provide a bearing unit for pinions, which, in addition to the versatility, also presents high resistance to axial loads too and is also simple and economical to be produced.

According to the present invention a bearing unit is realized, presenting the features defined in the enclosed claims.

### Brief description of the drawings

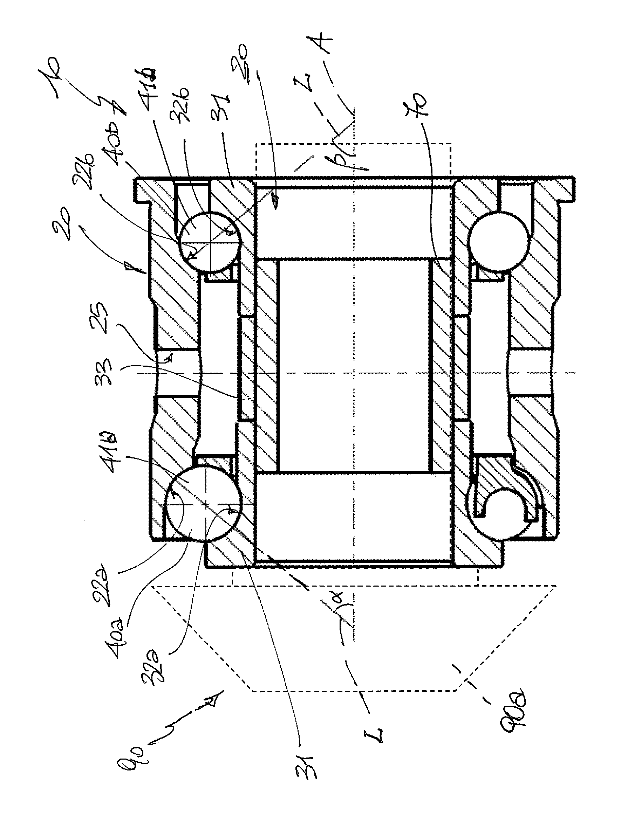

The present invention will be now described by reference to the enclosed figure, which shows, in an axial section and with parts shown schematically, a non-limitative embodiments.

### Detailed description

With reference to the annexed figure, 10 indicates as a whole a bearing unit for pinions, in which a pinion 90 is rotatably supported by the bearing unit 10 through the bearing unit 10 itself and is mounted projecting from the bearing unit 10, in other words, the pinion is mounted with its head 90a outside the bearing unit 10.

The bearing unit 10 has a central axis A of rotation and comprises:
- a single outer ring 20 internally provided with two raceways 22a and 22b;
- an inner ring 30 axially engaged by the pinion 90 and comprising, in turn, two half-rings 31 arranged axially aligned with each other and each having a respective raceway 32a and 32b, and a spacer 33 interposed between the two half-rings 31 and in axial contact with the two half-rings 31 themselves; and
- double row 40 of balls 41 arranged inside of the raceways 22a, 32a and 22b, 32b in an intermediate position between the outer ring 20 and the inner ring 30 to allow the rotation of the inner ring 30 with respect to the outer ring 20.

The bearing unit 10 is an oblique ball bearing unit in which the raceways 32a, 32b of the two half-rings 31 are axially moved with respect to the relative raceways 22a, 22b of the outer ring 20 and thanks to this configuration such a bearing unit is suited to support combined loads, or loads that act simultaneously in the axial and radial direction and act along a contact line L for each row 40. The contact lines L join, on a radial plane, the contact points between balls 41 of a row 40 and the relative raceways 22a, 32a and 22b, 32b, and subtend with respective lines perpendicular to the axis A respective contact angles α and β: the row 40 of balls 41, arranged inside of the raceways 22a, 32a which for convenience from now on will be denoted by 40a and 41a, presents a contact angle α of amplitude equal to the amplitude of the contact angle β of the row 40 of balls 41, arranged inside of the raceways 22a, 32a which for convenience hereafter will be denoted by 40b and 41b.

In the shown embodiment, the contact angles α and β are made so as to have a same amplitude: however, especially to assist in reducing friction between balls 41 and raceways 22a , 32a, according to an embodiment of the bearing unit 10 not shown but easily deducible from the foregoing description, the amplitudes of the contact angles α and β may be different from each other. Namely and preferably, the amplitude of the contact angles α may be greater than the amplitude of the contact angles β. Differentiate between the amplitudes of the contact angles α and β allows, with respect to the described case, to reduce friction without changing the distance between the so-called pressure centers, in other words between the points where the contact lines L intersect the axis A.

The balls 41a of the row 40a, i.e. the row 40a disposed in a position closer to the head 90a of the pinion 90, have a diameter of different size with respect to the size of a diameter of the balls 41b of the row 40b, i.e. the row 40b disposed in a position more far away from the head 90a of the pinion 90, and this difference must correspond to an increase in the diameter of the balls 41b of at least 20% .

Moreover, the row 40a of balls 41a has a diameter of greater size with respect to the size of a diameter of the row 40b of balls 41b, and this increase must be at least a 10% of the size of the diameter of the row 40b.

In the above mentioned case in which the amplitude of the contact angles α is greater than the amplitude of the contact angles β, taking as reference a symmetric unit with contact angles α and β having the same amplitude, the increase of the diameter size of the row 40a of balls 41a, from the side of the head 90a of the pinion 90, enables a reduction in the amplitude of the contact angles of this row 40a, in other words allows an increase of the amplitude of the contact angles α relative to the amplitude of the contact angles β permitting, therefore, a percentage of sliding of the balls 41a and, therefore, an overall reduction in friction.

A further advantage arising by the increase in the diameter size of the row 40a of balls 41a from the side of the head 90a of the pinion 90 and by the increase in the amplitude size of the contact angles α relative to the amplitude size of the contact angles β lies in the fact that the contact ellipse of the row 40a moves toward the center of the bearing unit 10 reducing the stress concentration that can occur near the end of the raceway.

The presence of the spacer 33 between the two half-rings 31 allows axially spacing the two rows 40 between them, allowing the use of the bearing unit 10 with pinions 90 having axial dimensions suitable for applications, for example, of the automotive type. Such applications, however, subject the bearing unit 10 in axial and radial loads of very high values and that is why appropriate countermeasures must be adopted to make the bearing unit 10 more resistant. Therefore, compared to a traditional solution of a bearing unit for pinions, having the diameters of the rows of the balls of different sizes, with the diameter of the row of balls closest to the pinion greater than the diameter of the row of balls farthest from the head of the pinion, and having diameters of balls of different sizes, with diameters of the balls of the row closest to the pinion greater than diameters of the balls of the row more distant from the head of the pinion allows to have closer contact angles, in other words steeper contact lines L, thus resulting in a higher load capacity, i.e. a higher resistance to bending moments along the axis A, and, above all, a reduction in friction.

Moreover, the presence of the spacer 33 between the two half rings 31 allows to realize, through the outer ring 20, at least one through-hole 25 in an intermediate position between the two rows 40: the size of this hole 25 does not have strong constraints since the axial space between the rows 40 is more than enough, and may be such as to allow easy and efficient lubrication of the bearing 10 itself. In the shown embodiment, the bearing unit 10 is provided with a single hole 25; however, depending on the technical requirements, always thanks to the above mentioned factors, the bearing unit 10 can be also provided with further holes 25 spaced equally along the peripheral circumference of the outer ring 20.

For the purpose of shipping the above described bearing unit 10, it is mounted inside of the two rings 31, a cylindrical tubular body 70, which has the purpose of retaining said rings 31 in their mounting position during the handling of the bearing unit 10, for example, from the producer to the end user and the tubular body is removed or replaced by the pinion 90 during assembly of the same bearing unit through the rings 31.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. Bearing unit (10) for pinions, in which a pinion (90) is rotatably supported by the bearing unit through the bearing unit itself and is mounted projecting from the bearing unit, the bearing unit (10) comprising:
- a single outer ring (20) internally provided with two raceways (22a, 22b);
- an inner ring (30) comprising two half-rings (31) arranged axially aligned with each half-ring provided with a respective raceway (32a, 32b;
- two rows (40) of balls (41) arranged inside of said raceways (22a, 32a), (22b, 32b) in an intermediate position between the outer ring (20) and the inner ring (30) to allow the rotation of the inner ring (30) with respect to the outer ring (20);
the bearing unit being **characterized in that**, in combination:
- the inner ring (30) comprises a spacer (33) interposed between the two half-rings (31);
- the raceways (32a, 32b) of the two half-rings (31) are axially moved with respect to the relative raceways (22a, 22b) of the outer ring (20);
- the balls (41) of a first row (40a) of balls of said two rows (40) of balls (41) have a diameter of different size with respect to the size of a diameter of the balls (41) of a second the row (40b) of balls of said two rows (40) of balls (41);
- the first row (40a) of balls has a diameter of different size with respect to the size of a diameter of the second row (40b) of balls;
- the first row (40a) of balls present a contact angle of amplitude preferably equal to the amplitude of the contact angle of the second row (40b) of balls.

2. Bearing unit according to claim 1, **characterized in that** the bearing unit also comprises at least a through hole (25) realized through the outer ring (20) for lubricating said bearing unit (10).
